# DEMANDE DE BREVET EUROPEEN

(11) **EP 3 575 232 A1**
(43) Date de publication de la demande: **04.12.2019**
(21) Numéro de dépôt: 18305655.5
(22) Date de dépôt: 29.05.2018
(51) Int. Cl.: B65D 25/22, A01K 39/00

(54) **MANGEOIRE POUR VOLAILLES D'ELEVAGE ET OISEAUX D'INTERIEUR**

(71) Demandeur: Nutri-Future Prod, 22600 Loudéac (FR)
(72) Inventeur: MACE, Tony, 56100 Lorient (FR); MICHEL, Matthias, 35740 Pacé (FR)
(74) Mandataire: Novagraaf Technologies

(57) **Abrégé**

La présente invention se rapporte à un support (2) rigide adapté à recevoir un récipient (1) pour aliments pour volailles ou oiseaux d'intérieur, présentant une forme substantiellement rectangulaire ou oblongue, comprenant :
- une aire de réception (3),
- une languette (4) susceptible d'accueillir au moins un moyen de fixation (5), ladite languette étant positionnée d'un côté (6) dudit support (2),
- une bavette (7), séparée en 2 parties (7a et 7b) au centre dudit support (2) accueillant et maintenant le récipient (1) dans le support (2),
- 2 béquilles de stabilisation (8a) et (8b) intégrées dans le support (2) de chaque côté de la bavette (7) et dépliables.

La présente invention se rapporte également à une mangeoire pour volailles ou oiseaux d'intérieur, comprenant au moins un support de l'invention, et au moins un récipient (1) placé dans le volume de réception (3) dudit au moins un support, ledit au moins un récipient (1) étant susceptible de contenir un aliment pour volailles ou oiseaux d'intérieur.

La présente invention se rapporte en outre à une utilisation d'une mangeoire selon l'invention, ou d'un support selon l'invention, pour l'approvisionnement en nourriture de volailles et oiseaux d'intérieur, notamment lors de leur élevage, de leur transport ou de la mise en place de leur élevage.

## Description

### Domaine technique

La présente invention se rapporte à un support (2) rigide adapté à recevoir un récipient (1) pour aliments pour volailles ou oiseaux d'intérieur, présentant une forme substantiellement rectangulaire ou oblongue.

Dans la description ci-dessous, les références entre crochets (**[ ]**) renvoient à la liste des références présentée à la fin du texte.

### Etat de la technique

L'élevage avicole est une pratique courante, qui concerne aussi bien les volailles que les oiseaux d'intérieur.

Dans le cadre d'un tel élevage, les animaux sont habituellement répartis dans une cage, devant laquelle est généralement disposée une mangeoire allongée en forme d'auge dans laquelle se trouve la nourriture à absorber par les animaux.

Cependant, durant le transport de ces animaux, les éleveurs sont confrontés à des problématiques requérant un savoir-faire tout particulier dû aux contraintes et aux particularités du transport d'animaux vivants.

En effet, face au stress du voyage, chaque espèce animale requiert, en outre, des soins particuliers, des connaissances spécifiques et du matériel adéquat. Concernant l'alimentation notamment, les animaux doivent pouvoir se nourrir durant le voyage, de manière à conserver leur poids, ne pas freiner leur croissance et ne pas accroître le stress provoqué par le transport. A ce titre, les mangeoires classiques ne sont pas adaptées, car elles peuvent se renverser dans la caisse de transport ou la cage dans laquelle ils séjournent en raison des mouvements de celle-ci provoqués par le transport. Ceci présente le double inconvénient de ne plus permettre aux animaux de se nourrir, et de souiller les animaux et la caisse de transport ou la cage dans laquelle ils séjournent.

La présente invention a pour but de pallier ces inconvénients, en fournissant une mangeoire adaptée aux problématiques liées au transport, tout en maîtrisant les coûts de fabrication d'une telle mangeoire.

### Description de l'invention

La présente invention répond à ces besoins en proposant un support permettant de transporter les aliments dans une caisse de transport ou une cage dans laquelle séjournent des animaux, sans que les aliments ne se renversent et ne souillent la caisse de transport ou la cage, voire les animaux eux-mêmes, notamment à l'occasion du transport des animaux. Le support de l'invention permet en outre aux animaux de continuer de s'alimenter durant leur transport, selon leur besoin, limitant ainsi leur stress et leur assurant une alimentation suffisante tout au long de leur voyage.

La présente invention se rapporte ainsi à un support rigide adapté à recevoir un récipient pour aliments, destinés notamment à des volailles ou des oiseaux d'intérieur, présentant une forme substantiellement rectangulaire ou oblongue, comprenant :
- une aire de réception,
- une languette susceptible d'accueillir au moins un moyen de fixation, ladite languette étant positionnée d'un côté dudit support,
- une bavette, séparée en 2 parties au centre dudit support accueillant et maintenant le récipient dans le support,
- 2 béquilles de stabilisation intégrées dans le support de chaque côté de la bavette et dépliables.

On entend par « support rigide », au sens de la présente invention, tout moyen permettant de soutenir un récipient sans se déformer lorsque le récipient est inséré dans le support rigide. A ce titre, le support rigide peut être constitué d'un matériau ou d'un mélange de matériau lui conférant la rigidité adapté. En complément, le matériau utilisé peut également présenter des propriétés de flexibilité et de mémoire de forme. Le matériau peut à ce titre être choisi dans le groupe comprenant le carton, comme par exemple le carton ondulé, le carton alvéolaire, le carton plat ou le carton spiralé, et les matériaux plastiques, comme par exemple le polyamide, le polycarbonate, le chlorure de polyvinyle, le polyéthylène, le polyéthylène téréphtalate, le polyméthacrylate de méthyle, le polypropylène, le polystyrène, le polyuréthane, le polyfluorure de vinylidène, le poly_diméthylsiloxane, l'acrylonitrile butadiène styrène, le polytetrafluoréthylène, le polyoxyméthylène, le poly_térephtalate de polyéthylène, l'acétate de cellulose ou les époxydes et les matériaux en amidon de pommes de terre, en cellulose, en canne à sucre, en algue.

Dans le cas où le support rigide a une forme substantiellement rectangulaire, il peut avoir la forme d'un rectangle avec des bords droits ou arrondis. Que le support rigide soit de forme substantiellement rectangulaire ou oblongue, celui-ci peut être inscrit dans un rectangle de 10 cm à 30 cm de longueur, et de 5 à 15 cm de largeur.

L'aire de réception est adaptée à recevoir le récipient contenant des aliments. L'aire de réception peut avoir une forme identique ou substantiellement identique à celle du support rigide, à savoir une forme substantiellement rectangulaire ou oblongue, ou une forme différente, par exemple une forme ronde ou carrée. De préférence, la forme de l'aire de réception est identique ou substantiellement identique à celle du support rigide.

Le récipient a une taille et une forme adaptée pour être insérée dans l'aire de réception. Le récipient peut comprendre un rebord reposant sur le support une fois le récipient inséré dans le support. Le récipient peut être en un matériau adapté à recevoir de la nourriture pour animaux. Il peut s'agir d'un matériau souple ou rigide, comme un matériau plastique, par exemple le polyamide, le polycarbonate, le chlorure de polyvinyle, le polyéthylène, le polyéthylène téréphtalate, le polyméthacrylate de méthyle, le polypropylène, le polystyrène, le polyuréthane, le polyfluorure de vinylidène, le poly_diméthylsiloxane, l'acrylonitrile butadiène styrène, le polytetrafluoréthylène, le polyoxyméthylène, le poly_térephtalate de polyéthylène, l'acétate de cellulose ou les époxydes, les matériaux en amidon de pommes de terre, en cellulose, en canne à sucre, en algue. Le récipient peut avoir une couleur choisie par l'homme du métier ; il peut s'agir avantageusement d'une couleur bien visible par les animaux, par exemple une couleur fluorescente.

L'aliment pour animaux peut être tout aliment adapté à l'animal à nourrir, notamment les volailles ou les oiseaux d'intérieur. L'aliment peut se présenter sous forme solide ou semi-solide, par exemple sous forme de gel nutritif et/ou hydratant, ou des matières sèches, comme des granulés ou de la poudre, cette liste n'étant pas limitative. Il peut alternativement s'agir d'un liquide, comme de l'eau ou une boisson adaptée aux animaux à nourrir.

Comme indiqué précédemment, le support rigide comprend une languette. La languette permet de fixer l'étui de l'invention à la cage ou la caisse de transport des animaux. La fixation est avantageusement amovible, c'est-à-dire qu'il est possible de détacher l'étui de la cage ou de la caisse de transport, et de ré-utiliser l'étui ultérieurement. Avantageusement, la languette est positionnée sur un des deux côtés les plus longs du support, ceci permettant une bonne fixation et stabilisation du support sur la cage ou la caisse de transport. La languette peut avoir une forme et une taille adaptée à être insérée dans les lieux d'accueil de la cage ou la caisse de transport, par exemple l'espace entre les barreaux d'une cage ou d'une caisse de transport, ou un interstice d'une cage ou d'une caisse de transport ajourée. Cette forme peut être par exemple une forme en U, en demi cercle, en cercle ou rectangulaire. Avantageusement, la languette peut être suffisamment souple pour être tordue afin de permettre ou faciliter le passage puis le blocage de la languette (4) dans les lieux d'accueil. Avantageusement, la languette peut ensuite reprendre sa forme originelle ou bien rester dans la forme prise lors de l'insertion dans la cage, en fonction du mode de fixation choisi, de la forme de la cage et du matériau choisi. Avantageusement, la languette est susceptible d'être rabattue le long du support jouxtant ladite languette et/ou contre la bande. L'homme du métier pourra choisir un matériau adapté au regard de ses connaissances générales, qui peut être par exemple le carton, comme le carton ondulé, le carton alvéolaire, le carton plat ou le carton spiralé, ou les matériaux plastiques, comme par exemple le polyamide, le polycarbonate, le chlorure de polyvinyle, le polyéthylène, le polyéthylène téréphtalate, le polyméthacrylate de méthyle, le polypropylène, le polystyrène, le polyuréthane, le polyfluorure de vinylidène, le poly_diméthylsiloxane, l'acrylonitrile butadiène styrène, le polytetrafluoréthylène, le polyoxyméthylène, le poly_térephtalate de polyéthylène, l'acétate de cellulose ou les époxydes, les matériaux en amidon de pommes de terre, en cellulose, en canne à sucre, en algue.

La languette est adaptée pour accueillir au moins un moyen de fixation (5). A ce titre, la languette (4) peut être perforée pour accueillir certains moyens de fixation (5) nécessitant de traverser la languette. Le moyen de fixation (5) peut être choisi parmi tous les moyens adaptés pour maintenir la languette contre la paroi de la cage de manière à ce que le support soit maintenu contre la paroi et ne puisse pas se renverser. Le moyen de fixation peut à ce titre être choisi parmi un clou bouton pression, une pince crocodile, un système vis/écrou papillon et un adhésif.

La languette (4) peut comprendre à sa base (9) deux encoches (10a, 10b) de stabilisation, lesdites encoches (10a, 10b) étant dans le plan de la languette (4). Avantageusement, les encoches assurent ou facilitent le passage puis le blocage de la partie haute de la languette (4) dans les lieux d'accueil du support au sein de la cage ou de la caisse de transport.

Selon un mode de réalisation, le support peut contenir plus d'une languette, par exemple 2, 3 ou 4 languettes, de manière à renforcer la fixation du support à la cage ou à la caisse de transport.

Comme indiqué précédemment, le support comprend une bavette (7), séparée en 2 parties (7a et 7b) au centre du support (2), accueillant et maintenant le récipient (1) dans le support (2). La bavette peut être toute bande d'une largeur adaptée à accueillir et maintenir le récipient dans le support, par exemple une largeur comprise entre 2 et 10 cm, de préférence comprise entre 3 cm et 5 cm. La longueur de chaque partie de la bavette peut être choisie par l'homme du métier pour permettre d'accueillir et de maintenir le récipient dans le support, par exemple une longueur comprise entre 2 et 4 cm. La bavette peut être réalisée en un matériau connu adapté à l'usage indiqué ci-dessus, par exemple dans le même matériau que celui du support.

Le support comprend en outre 2 béquilles de stabilisation (8a) et (8b) dépliables intégrées dans le support (2) de chaque côté de la bavette (7), chaque béquille pouvant éventuellement comprendre au moins 1 butoir chacune (8c) et (8d). Les béquilles peuvent être posées au sol ou être au-dessus du sol. Avantageusement, les béquilles stabilisent le support contre la paroi de la cage ou de la caisse de transport, qu'elles soient posées au sol ou au-dessus du sol. Les butoirs corrigent avantageusement l'inclinaison du support.

Avantageusement, les caractéristiques du support de l'invention lui confèrent la solidité nécessaire pour disposer dans l'aire de réception une charge significative, et la stabilité nécessaire au transport d'aliments. Notamment, le support de l'invention possède la capacité à supporter une charge contenue dans son aire de réception et venant en appui contre au moins l'un de ses côtés et/ou une charge exerçant un effort vertical de compression sur au moins l'un de ses côtés.

Le support de l'invention peut être réalisé par toute méthode connue de l'homme du métier. S'il s'agit d'un support en matière plastique, le support peut être réalisé par injection ou par fraisage, ou par toute autre méthode adaptée connue de l'homme du métier. S'il s'agit d'un support en carton, le support peut être réalisé par découpage et pliage d'un patron dans lesquels les éléments du support sont prédécoupés et les lignes de plis sont indiquées, par exemple en pointillés.

Un autre objet de l'invention se rapporte à une mangeoire pour volailles et oiseaux d'intérieur, comprenant au moins un étui tel que décrit précédemment, et au moins un récipient placé dans l'aire de réception de l'au moins un étui, l'au moins un récipient étant susceptible de contenir un aliment pour volailles et oiseaux d'intérieur tel que décrit précédemment.

Un autre objet de l'invention se rapporte à une utilisation d'une mangeoire telle que décrite précédemment, ou d'un étui tel que décrit précédemment, pour l'approvisionnement en nourriture de volailles et/ou d'oiseaux d'intérieur, notamment lors de leur élevage, de leur transport ou de la mise en place de leur élevage.

D'autres avantages pourront encore apparaître à l'homme du métier à la lecture des exemples ci-dessous, illustrés par les figures annexées, donnés à titre illustratif.

### Brève description des figures

- La figure 1 représente une vue schématique de face d'un patron permettant la fabrication du support selon la présente invention par sa mise en volume.
- La figure 2 représente une vue schématique de face d'un support rigide selon la présente invention.
- La figure 3 représente une vue schématique de face d'un support rigide alternatif selon la présente invention.
- La figure 4 représente une vue schématique de face du support rigide selon la présente invention dans lequel un récipient pour aliments pour volailles et oiseaux d'intérieur est inséré.

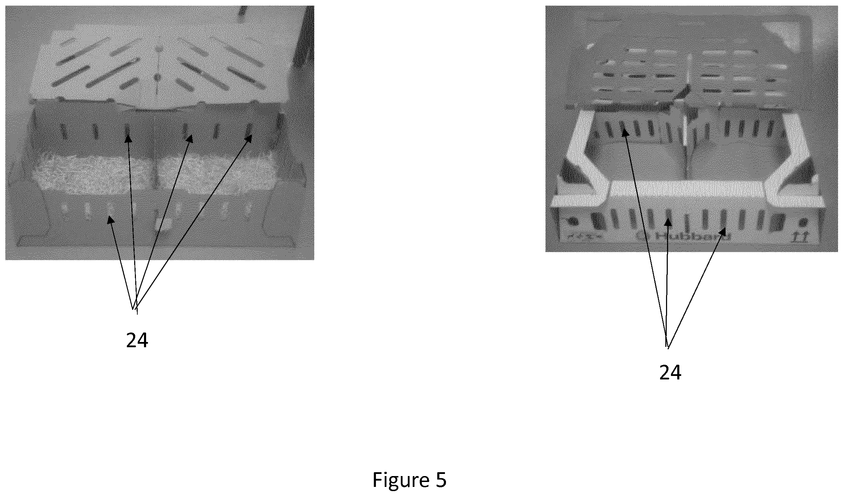

- La figure 5 représente une photographie de différentes cages et caisses de transport sur lesquelles peut être inséré le support de l'invention.

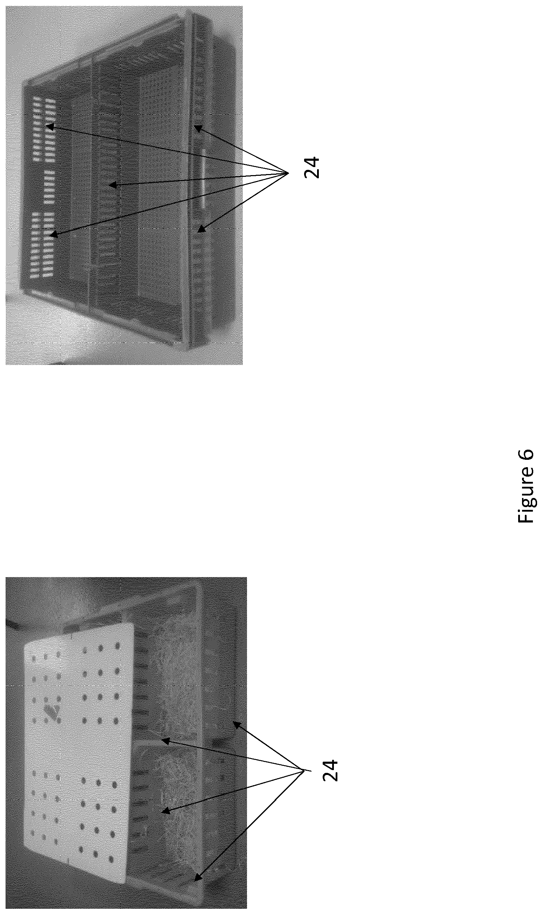

- La figure 6 représente une photographie de différentes cages et caisses de transport sur lesquelles peut être inséré le support de l'invention.

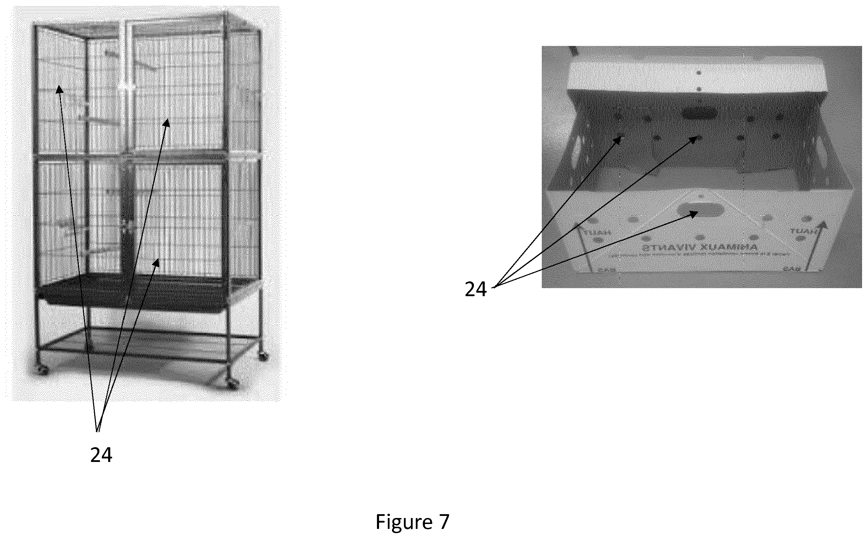

- La figure 7 représente une photographie de différentes cages et caisses de transport sur lesquelles peut être inséré le support de l'invention.

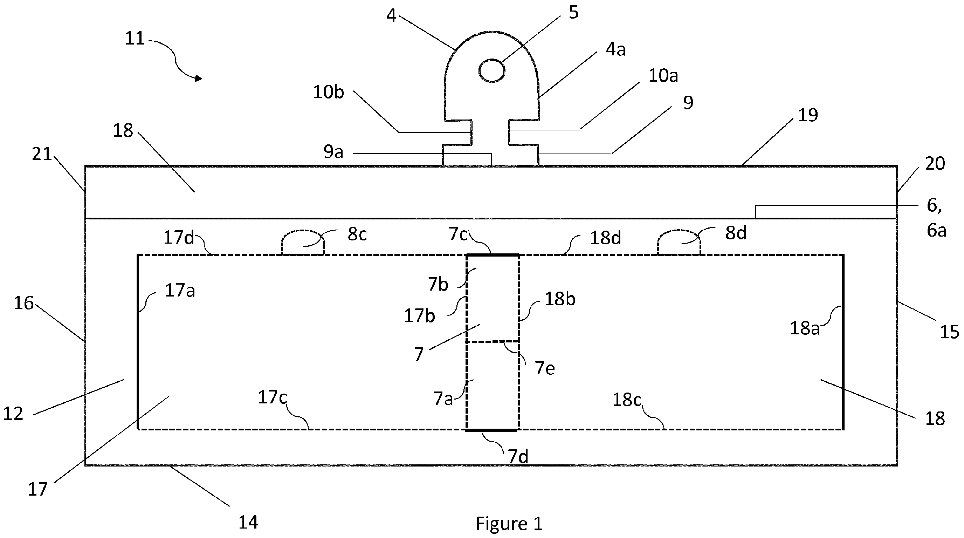

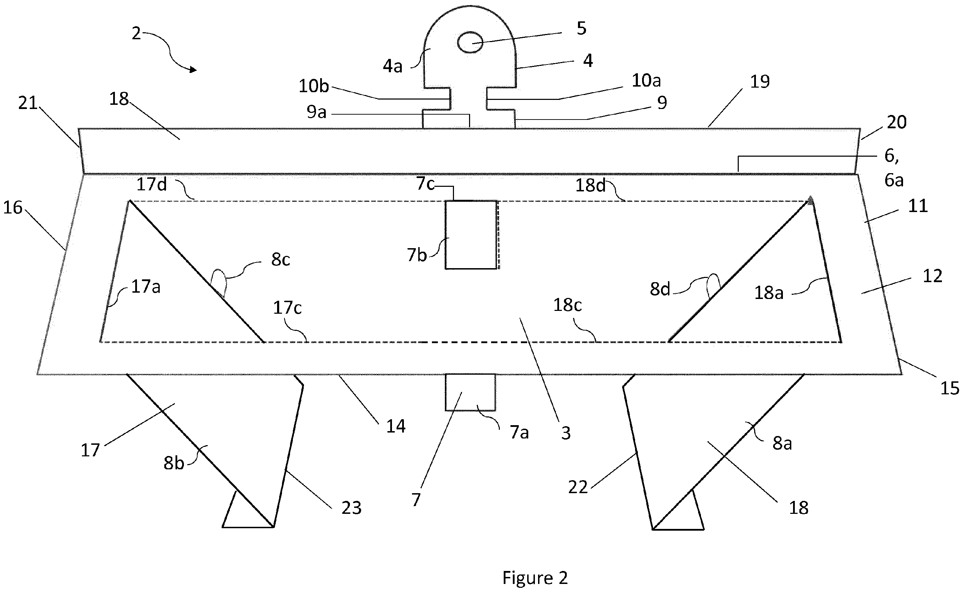

Le patron (11) représenté sur la figure 1 constitue un patron découpé. Dans le mode de réalisation représenté par les différentes figures, le patron (11) est formé dans un matériau du type carton. Le patron (11) pourrait être formé dans un matériau analogue, tel que par exemple du PET ou un plastique souple, sans que l'on sorte du cadre de la présente invention. Le panneau de fond (12) présente une forme rectangulaire et définit de ce fait deux côtés (6) et (14) de longueur et deux côtés (15) et (16) de largeur ; le côté (6) de longueur est constitué par une ligne de pliure (6a) d'extrémité, à partir de laquelle s'étend une bande (18) destiné, dans l'exemple non limitatif, à améliorer la stabilité du support (2) et éventuellement à recevoir du texte et/ou des dessins d'un côté de la bande et de l'adhésif de l'autre côté de cette bande. Tel que cela apparaît à l'observation de la figure 2, la bande (18) peut ainsi être inclinée dans une position ascendante par rapport au plan défini par le panneau de fond (12).

Selon l'exemple non limitatif représenté par les figures 1 et 2, le panneau de fond (12) ainsi que la bande (18) présentent une forme rectangulaire et définissent une longueur L. La bande (18) définit ainsi un côté de longueur (19) et deux côtés (20) et (21) de largeur, et partage le côté de longeur (6) avec le panneau de fond (12).

On comprend que pour mettre en volume le support (2) tel qu'illustré dans la figure 1, le panneau de fond (12) et la bande (18) peuvent être tout d'abord inclinés l'un par rapport à l'autre, selon la ligne de pliure (6a), jusqu'à atteindre une position dans laquelle le panneau de fond (12) et la bande (18) ont disposés sensiblement perpendiculairement l'un par rapport à l'autre.

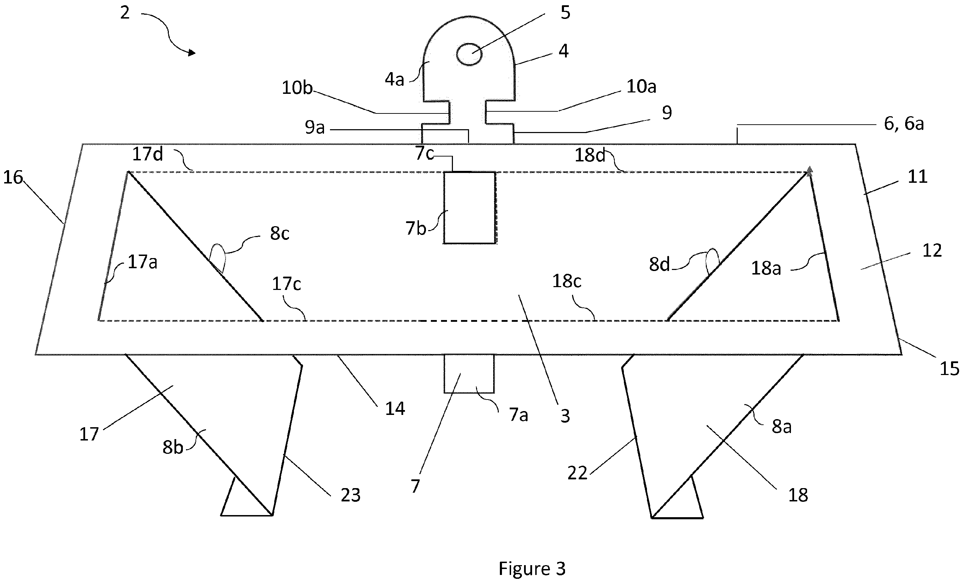

Il est entendu que la figure 2 n'est qu'un exemple non limitatif de mise en oeuvre de l'invention, et que l'invention pourrait également être réalisée sans la bande (18), comme cela est représenté par la figure 3.

Dans l'exemple non limitatif des figures 1 et 2, la bande (18) est prolongée au niveau de son côté (19) par une languette (4) susceptible d'accueillir au moins un moyen de fixation (5), par exemple un orifice circulaire comme représenté dans les figures 1 à 4. La base (9) de la languette (4) est ainsi en contact avec le côté (19) de la bande (18) au niveau de sa base (9), au niveau du côté (9a). Comme indiqué sur la figure 1, la languette (4) comprend à sa base (9) deux encoches (10a, 10b) de stabilisation perpendiculaires au plan de la languette (4). Avantageusement, les encoches (10a, 10b) assurent le passage puis le blocage de la partie haute de la languette (4) dans les lieux d'accueil du support (2), ces lieux d'acceuil pouvant être classiquement des fentes (24) aménagées dans les cages ou les caisses de transport d'animaux. Ainsi, les encoches (10a, 10b) définissent, au sein de la languette (4), une portion de verrouillage (4a). Avantageusement, les encoches (10a, 10b) permettent d'articuler la languette (4) de manière à faciliter l'introduction de la portion de verrouillage (4a) dans un lieu d'accueil (21) ménagé au sein d'une cage ou d'une caisse de transport. En outre, la portion de verrouillage (4a) de la languette (4) est configurée de telle sorte que, une fois engagée au travers du lieu d'accueil, la portion de verrouillage (4a) s'oppose au retrait de la languette (4) hors du lieu d'accueil, empêchant ainsi tout renversement accidentel de la cage ou de la caisse de transport.

Dans l'exemple de la figure 1, sont ménagés dans le panneau de fond (12) deux rectangles (17) et (18) amovibles, de même dimension, et séparés par une bande définissant une bavette (7). Chaque rectangle définit de ce fait deux côtés (17c ; 18c) et (17d ; 18d) de longueur et deux côtés (17a ; 18a) et (17b ; 18b) de largeur. Chacun des côtés (17c ; 18c) et (17d ; 18d) de longueur, ainsi que les côtés (17b) et (18b) de largeur, forment une ligne de pré-decoupage. Chacun des côtés (17a) et (18a) de largeur forment une ligne de pliure.

Comme il apparaît sur la figure 1, la bavette (7) jouxte les côtés (17b) et (18b) des deux rectangles (17) et (18). Elle est définie par deux lignes de pliure (7c) et (7d) respectivement dans l'alignement des côtés (17c) et (18c) d'une part, et (17d) et (18d) d'autre part. La bavette (7) est par ailleurs pré-découpée en son milieu par une ligne de pré-découpage (7e), de manière à pouvoir être séparée en deux par simple pression et définissant ainsi deux parties identiques (7a) et (7b).

Ainsi, par pression sur les deux rectangles (17) et (18), ceux-ci peuvent être rabattus, formant ainsi deux béquilles de stabilisation (8a) et (8b) dépliables de chaque côté de la bavette (7).

Dans un mode de réalisation tel que montré sur les figures 2, 3 et 4, chaque béquille (8a) et (8b) peut comprendre une ligne de pliure (22, 23) perpendiculaire aux côtés (17c) et (18c) (ou (17d) et (18d)). Ces lignes de pliure (22, 23) permet de rabattre l'extrémité de chaque béquille (8a) et (8b) pour une meilleure stabilisation du support soit au sol, si les béquilles (8a) et (8b) touchent le sol, soit contre la paroi de la cage ou de la caisse de transport.

Comme il apparaît sur les figures 1, 2 et 3, chaque béquille (8a) et (8b) peut comprendre un butoir (8c) et (8d) respectivement sur le côté (18d) et (17d).

On comprend que pour mettre en volume le support (2) tel qu'illustré dans la figure 1, une pression peut être simplement exercée sur chacun des deux rectangles (17) et (18) de manière à les rabattre et à former les béquilles (8a) et (8b), et à rabattre la bavette (7), formant ainsi les parties identiques (7a) et (7b), ménageant de ce fait une aire de réception (3) comprenant de part et d'autre les parties (7a) et (7b) de la bavette, comme montré en figure 2.

Une fois le support mis en volume, l'aire de réception (3) est ainsi accessible pour disposer un récipient (1), comme montré dans les figures 2 et 3.

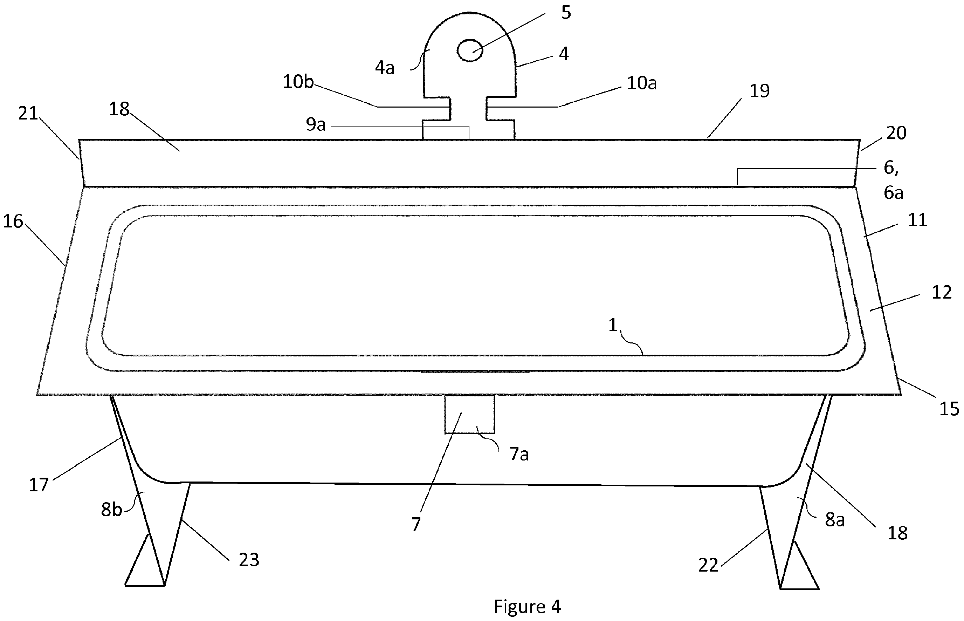

Il apparaît au vu des explications qui précèdent que le support (2) selon la présente invention peut être mis en volume par un utilisateur aisément et sans outillage ni assistance extérieure. Par ailleurs, les caractéristiques techniques du support (2) lui confèrent, une fois mis en volume, la solidité nécessaire pour disposer dans l'aire de réception (3) une charge significative, par exemple un récipient (1) contenant des la nourriture pour animaux, en particulier pour volaille ou oiseaux d'intérieur, comme illustré dans la figure 4.

## Revendications

1. Support (2) rigide adapté à recevoir un récipient (1) pour aliments pour volailles ou oiseaux d'intérieur, présentant une forme substantiellement rectangulaire ou oblongue, comprenant :
- une aire de réception (3),
- une languette (4) susceptible d'accueillir au moins un moyen de fixation (5), ladite languette étant positionnée d'un côté (6) dudit support (2),
- une bavette (7), séparée en 2 parties (7a et 7b) au centre dudit support (2) accueillant et maintenant le récipient (1) dans le support (2),
- 2 béquilles de stabilisation (8a) et (8b) intégrées dans le support (2) de chaque côté de la bavette (7) et dépliables.

2. Support selon la revendication 1, ledit support (2) rigide étant en un matériau choisi dans le groupe comprenant le carton, les matériaux plastiques, les matériaux en amidon de pommes de terre, les matériaux en cellulose, les matériaux en canne à sucre et les matériaux en algue.

3. Support selon la revendication 1 ou 2, dans lequel ladite languette (4) est perforée pour accueillir ledit moyen de fixation (5).

4. Support selon l'une quelconque des revendications précédentes, dans lequel ledit moyen de fixation (5) est choisi parmi un clou bouton pression, une pince crocodile, un système vis/écrou papillon et un adhésif.

5. Support selon l'une quelconque des revendications précédentes, dans lequel ladite languette (4) comprend à sa base (9) deux encoches (10a, 10b) de stabilisation, lesdites encoches (10a, 10b) étant dans le plan de la languette (4).

6. Support selon l'une quelconque des revendications précédentes, dans lequel ladite languette (4) est susceptible d'être rabattue le long dudit support (2) jouxtant ladite languette (4) et/ou contre la bande (18).

7. Mangeoire pour volailles ou oiseaux d'intérieur, comprenant au moins un support tel que défini dans l'une quelconque des revendications 1 à 6, et au moins un récipient (1) placé dans le volume de réception (3) dudit au moins un support, ledit au moins un récipient (1) étant susceptible de contenir un aliment pour volailles ou oiseaux d'intérieur.

8. Mangeoire selon la revendication 7, dans laquelle ledit récipient (1) comprend un gel nutritif et/ou hydratant, ou des matières sèches.

9. Utilisation d'une mangeoire selon la revendication 7 ou 8, ou d'un support selon l'une quelconque des revendications 1 à 6, pour l'approvisionnement en nourriture de volailles et oiseaux d'intérieur, notamment lors de leur élevage, de leur transport ou de la mise en place de leur élevage.
